## Europäisches Patentamt

(19) **European Patent Office**

**Office européen des brevets**

(11) Publication number: **0 091 084**
**B1**

(12) **EUROPEAN PATENT SPECIFICATION**

(45) Date of publication of patent specification: **16.08.89**

(51) Int. Cl.⁴: **G 05 D 13/62**

(21) Application number: **83103140.6**

(22) Date of filing: **30.03.83**

(54) **Sewing machine controlling apparatus.**

(30) Priority: **02.04.82 JP 55804/82**
**02.04.82 JP 55805/82**

(43) Date of publication of application:
**12.10.83 Bulletin 83/41**

(45) Publication of the grant of the patent:
**16.08.89 Bulletin 89/33**

(84) Designated Contracting States:
**DE FR GB**

(56) References cited:
**EP-A-0 028 138**
**EP-A-0 028 139**

(73) Proprietor: **Matsushita Electric Industrial Co., Ltd.**
**1006, Oaza Kadoma**
**Kadoma-shi Osaka-fu, 571 (JP)**

(72) Inventor: **Neki, Shigeo**
**2-1-312, Taishibashi 3-chome Asahi-ku**
**Osaka-shi Osaka-fu (JP)**
Inventor: **Shinozaki, Nozomu**
**62-11, Ikaganishimachi**
**Hirakata-shi Osaka-fu (JP)**
Inventor: **Morofuji, Takeshi**
**13-11, Kohda 2-chome**
**Hirakata-shi Osaka-fu (JP)**

(74) Representative: **Eisenführ & Speiser**
**Martinistrasse 24**
**D-2800 Bremen 1 (DE)**

Courier Press, Leamington Spa, England.

**EP 0 091 084 B1**

**Description**

The present invention relates to a sewing machine controlling apparatus comprising an adjusting means for setting a machine speed, a set position detecting means for converting the position of said adjusting means into a digital set position signal $P_D$, a speed converting means for converting said set position signal $P_D$ into a digital speed setting signal S, a motor the speed of which is controlled in a step by step fashion in accordance with said speed setting signal S, a sewing machine to be mechanically driven by said motor, a storage means for storing said set position signal $P_D$, each of the discrete machine speed setting signals $S_j$, j=0, 1, 2...corresponding to a series of digital set position signals $P_{Dm}$, m=0, 1, 2..., $P_D{}^{**}$ being the position signal at a flank between two adjacent speed setting signals $S_j$, $S_{j\pm1}$.

EP—A—0 028 138 discloses a sewing machine controlling apparatus of the above type, in which a digital position signal corresponding to the setting of a foot pedal is translated in an arithmetic unit into time period data for activating the magnetic clutch or the magnetic brake of the sewing machine to accelerate or decelerate the sewing machine in accordance to the sign of the time period data.

EP—A—0 028 139 discloses a digital sewing machine controlling apparatus of the type as disclosed in EP—A—0 028 138, including however an arithmetic circuit, the output of which controls the clutch or the brake of the sewing machine and varies proportional to the rate of speed variation of the sewing machine to provide a quick response to sudden changes in sewing load.

The sewing machine controlling apparatuses known from reference EP—A—0 028 138 and particularly EP—A—0 028 139 show a quick response to any change of set position of the adjusting means, i.e. the foot pedal; they suffer however from the disadvantage that even small position changes of the foot pedal caused by machine vibrations etc, will be processed into a respective speed change of the sewing machine, thus making practical use difficult.

Accordingly, it is an object of the present invention to provide an improved sewing machine controlling apparatus with quick response of any position change of the adjusting means, in which however the influence of sewing machine vibrations to the speed of the sewing machine is eliminated to ensure smooth and stable speed operation.

According to the present invention this object is solved by a sewing machine as specified in the claim.

By converting the value of the set position signal $P_D{}^{**}$ at any flank between two adjacent speed setting signals $S_1$ and $S_{j\pm1}$ in accordance with the previously stored set position signal, the speed setting signal will not jump to another value when vibrations of the sewing machine change the set position signal $P_D$ to the value $P_D{}^{**}$. Thus, the influence of vibrations to the sewing speed is eliminated.

The object and other objects, features, aspects and advantages of the present invention becomes more apparent from the following detailed description of the present invention when taken in conjunction with the accompanying drawings.

Brief description of the drawings

Fig. 1 is a block diagram of a sewing machine controlling apparatus according to the present invention.

Fig. 2 is a chart for illustrating the sewing machine speed with respect to the position of the adjusting means, and

Fig. 3 is a flow chart showing the speed setting of the sewing machine.

Detailed description of the invention

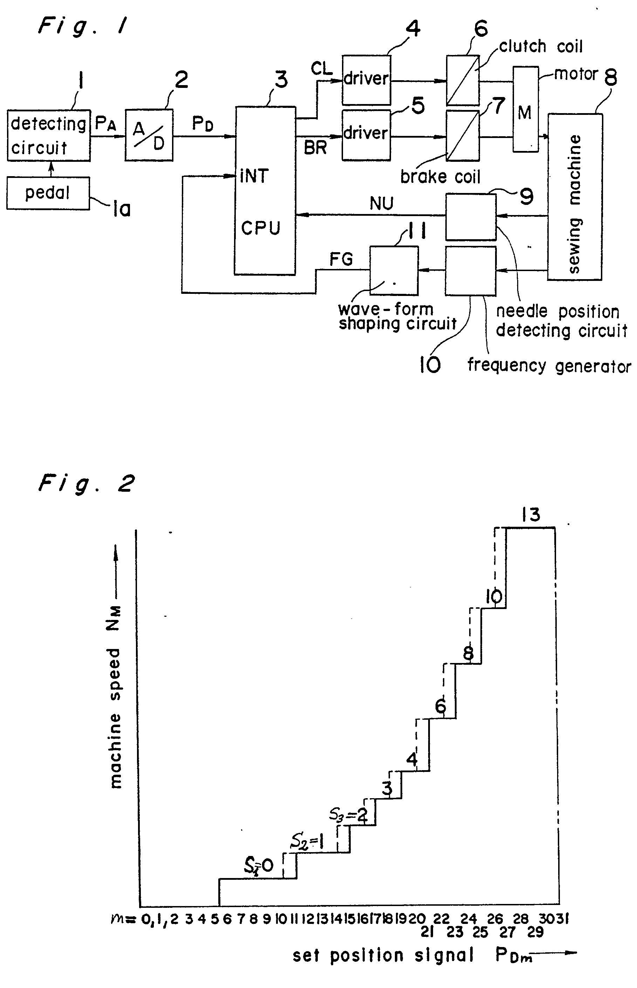

Referring to Fig. 1, there is provided a pedal-position detecting circuit 1 which is connected with a microcomputer 3 through an A/D transducer 2.

The circuit 1 converts the stepping amount from the reference position of a treadle pedal 1a provided in association with a sewing machine 8 into electric signals. For example, the reciprocating operation of the pedal is converted into a revolving action. A magnet is disposed at the central portion of the pedal for operative cooperation, and a means is used of detecting the rotary angle of the magnet with a magnetic reluctance element to amplify it. Thus, the output signal $P_A$ is outputted from the circuit 1 as an analog signal. The A/D transducer 2 is adapted to convert, into the digital signal $P_D$ of 4 bits, the analog signal $P_A$ of the circuit 1 to input into the microcomputer 3. The microcomputer 3 is connected with the sewing machine 8 through a pair of drivers 4, 5 and coils 6, 7, to constitute a means for controlling the sewing machine 8 in a central portion of the machine control. The drivers receive the outputs from the microcomputer 3 to drive the clutch coil 6 and the brake coil 7. A motor M is provided in association with the sewing machine 8 as a so-called electromagnetic coupling construction wherein the motor transmits the turning effect of a motor main-body, which is always rotating at a high speed, to an output shaft through the magnetic circuit due to the excitation of the clutch coil 6, the motor changes the sliding speed with respect to the rotary portion of the motor main-body by the intensity of the exciting current thereby to perform the speed controlling operation, and the motor is adapted to stop the output shaft through the magnetic circuit due to the excitation of the brake coil 7. The sewing machine 8 is normally coupled to the output shaft of the motor through a pulley, a belt. A needle position detecting circuit 9 is provided between the microcomputer 3 and the sewing machine 8, and is adapted to adjust a magnet piece, engaged with the shaft end of the sewing machine 8, in accordance with the needle-above position to rotate it in synchronous relation to the rotation of the machine shaft. The needle-above position is detected, by a hall IC, which is provided in association

2

with the circuit 9 and is disposed in a stationary position opposite to the magnet piece, to output a needle-above signal NU. A frequency generator 10 is connected between the microcomputer 3 and the sewing machine 8 together with a wave-form shaping circuit 11 and is normally engaged with the machine shaft end to output signals, which have a period to be varied in accordance with the revolution speed of the sewing machine. The wave-form shaping circuit 11 is composed of a circuit with a comparator as a center for shaping the signals to be outputted from the frequency generator into rectangular-wave pulse signals FG. The pulse signals FG of the circuit 11 are inputted into the offering terminal iNT of the microcomputer 3.

The operation of the above-described apparatus will be described hereinafter.

Once the pedal is stepped on by the operator from the reference position, the motion amount is detected by the pedal-position detecting circuit 1 thereby to output an analog signal $P_A$. The analog signal $P_A$ is converted into a set position signal $P_D$, which is a digital value of 4 bits, by an A/D transducer 2.

The microcomputer 3 converts the set position signal $P_D$ into numerical value, i.e., a digital speed setting signal S, by a ROM table to be described later, and outputs a signal CL, which excites a clutch coil 6 through the driver 4 thereby to drive the sewing machine 8.

The pulse signals FG from the wave form shaping circuit 11 are adapted to be outputted into the offering input terminal iNT of the microcomputer 3. The microcomputer 3 divides in frequency the offering input, measures the frequency-divided period, effects an assignment operation in an operation formula to be described later to control the exciting time of the clutch brake. The speed controlling operation for the sewing machine 8 is performed while the measurement and controlling within the microcomputer 3 are being repeated. Accordingly, the sewing machine 8 is operated at a speed in accordance with the analog signal $P_A$ outputted through the detection by the pedal-position detecting circuit 1.

When the pedal is returned towards the reference position and the set position signal $P_D$ becomes smaller than the normal value, a low speed is set and the break coil 7 is excited through the driver 5 so that the sewing machine 8 is rapidly reduced in speed to the low speed. When the sewing machine 8 becomes slower in speed, the clutch coil 6 is turned off, when the need-above signal Nu from the needle-position detecting circuit 9 has been outputted, to excite the brake coil 7 for a given time, so that it is caused to come into a stop in the needle-above position.

In that way a series of operations of finishing a needlework, replacing it by the new needlework, and starting to sew it, may be effected.

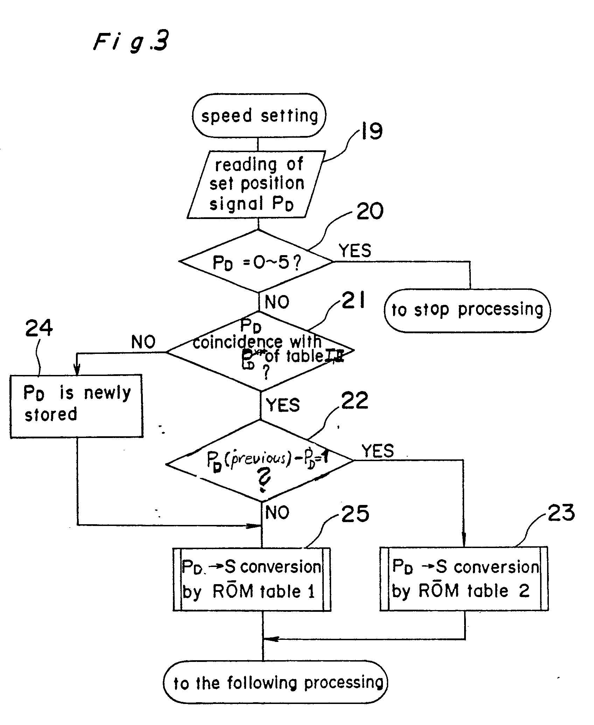

With reference to Fig. 2 and Fig. 3 the invention will be described in detail. The ROM table for converting the set position signal $P_D$ to the speed setting signal S is shown in Table I and Table II, respectively. The relationship of the machine speed with respect ot the set position signal $P_D$ will be described as graph in Fig. 2. Referring to Fig. 2, the solid line is shown in accordance with the ROM table 1, while the broken line is shown in accordance with the ROM table 2.

TABLE I (ROM Table 1)

| Set position signal $P_{Dm}$ | Speed setting signal $S_j$, j=0,1,2 |
|---|---|
| m= 0 | |
| 1 | |
| 2 | |
| 3 | $S_0=*(0)$ |
| 4 | |
| 5 | |

TABLE II (ROM Table 2)

| Set position signal $P_{Dm}$ | Speed setting signal $S_j$, j=0,1,2 |
|---|---|
| m= 0 | |
| 1 | |
| 2 | |
| 3 | $S_0=*(0)$ |
| 4 | |
| 5 | |

| TABLE I (ROM Table 1) (contd.) | | TABLE II (ROM Table 2) (contd.) | |
|---|---|---|---|
| Set position signal $P_{Dm}$ | Speed setting signal $S_j$, j=0,1,2 | Set position signal $P_{Dm}$ | Speed setting signal $S_j$, j=0,1,2 |
| 6 | | 6 | |
| 7 | | 7 | |
| 8 | $S_1=0$ | 8 | $S_1=0$ |
| 9 | | 9 | |
| 10 | | 10 | |
| **11=$P_D$** | | **11=$P_D$** | |
| 12 | | 12 | |
| 13 | $S_2=1$ | 13 | $S_2=1$ |
| 14 | | 14 | |
| **15=$P_D$** | | **15=$P_D$** | $S_3=2$ |
| 16 | $S_3=2$ | 16 | |
| **17=$P_D$** | | **17=$P_D$** | $S_4=3$ |
| 18 | $S_4=3$ | 18 | |
| **19=$P_D$** | | **19=$P_D$** | $S_5=4$ |
| 20 | $S_5=4$ | 20 | |
| **21=$P_D$** | | **21=$P_D$** | $S_6=6$ |
| 22 | $S_6=6$ | 22 | |
| **23=$P_D$** | | **23=$P_D$** | $S_7=8$ |
| 24 | $S_7=8$ | 24 | |
| **25=$P_D$** | | **25=$P_D$** | $S_8=10$ |
| 26 | $S_8=10$ | 26 | |
| **27=$P_D$** | | **27=$P_D$** | |
| 28 | | 28 | |
| 29 | $S_9=13$ | 29 | $S_9=13$ |
| 30 | | 30 | |
| 31 | | 31 | |

Two types of ROM tables 1 and 2 are different only in the portions marked with $P_D$** the so called flank set portion signals i.e., portions where the speed setting signal S jumps between the adjacent values $S_j$, $S_{j\pm1}$, j=1,2,.... The speed setting speed signals $S_1$=(0)* in the tables is necessary only from the driving condition to the stop. The 0 through 5 of the set position signall $P_D$ corresponding to $S_1$=(0)* is distinguished as a stop instruction region in accordance with a special program.

The selecting means of two ROM tables are shown in the flow chart of Fig. 3. The operation will be described hereinafter in accordance with the same drawing.

At first, at 19, the actual set position signal $P_D$ is read, the check is made as to whether the $P_D$ stays within the stop instruction range, at 20, it goes to a stop processing routine if it stays within the stop instruction range; the driving condition of the machine will continue if it does not stay within the stop instruction range.

Then, at 21, the check is made as to whether or not the actual set position signal $P_D$ is equal to a value $P_D$** in Table I and II. If so, the check is made at 22, as to whether or not the value is smaller by 1 than the previously stored $P_D$. If so, $P_D$ is converted to the speed setting signal S by the $\overline{ROM}$ table 2, at 23. If not so, $P_D$ is converted to the speed setting signal S by $\overline{ROM}$ table 1, at 25.

If $P_D \neq P_D$** at 21, the previously stored data of the $P_D$ i.e. $P_D$ (previous) is newly set to the actual $P_D$ at 24, and $P_D$ is converted into the speed setting signal S by the $\overline{ROM}$ table 1, at 25.

The processing shown in the flow chart of Fig. 3 is inserted into one portion of the control processing loop during the machine driving operation. To make the operation short, the $\overline{ROM}$ table 2 is adopted, only when the actual set position signal $P_D$ is next smaller by 1 than the previously stored set position signal $P_D$ and is in the switching portion (the values $P_D$** of Table 1, Table 2) of the speed setting signals, to provide the broken line of the machine speed of Fig. 6. With the exception of the above the $\overline{ROM}$ table 1 is adapted to provide the solid line machine speed of Fig. 6.

When the set position signal $P_D$ is converted as described hereinabove to the speed setting signal $S_1$ the machine speed shows a hysteresis operation, c.f. Fig. 2. Accordingly, when the range of the analog signal $P_A$ corresponding to the flank set position signal value $P_D$** is kept sufficiently large, the machine speed can be independent of the vibrations of the machine.

The above-description is given for a sewing machine wherein a pedal is used as the adjusting means for setting the machine speed. The present invention is effective when the variable volume for restricting the maximum speed of the machine is used as the adjusting means, and the set position signal is provided through the A/D converter, or even when the set position signal is adapted to be provided directly by a cord switch.

## Claim

A sewing machine controlling apparatus comprising an adjusting means for setting a machine speed, a set position detecting means for converting the position of said adjusting means into a digital set position signal $P_D$, a speed converting means for controlling said set position signal $P_D$ into a digital speed setting signal S, a motor the speed of which is controlled in a step by step fashion in accordance with said speed setting signal S, a sewing machine to be mechanically driven by said motor, a storage means for storing said set position signal $P_D$, each of the discrete machine speed setting signals ($S_j$, j=0, 1, 2...) corresponding to a series of digital set position signals ($P_{Dm}$, m=0, 1, 2...), $P_D$** being the position signal at a flank between two adjacent speed setting signals ($S_j$, $S_{j\pm1}$), characterized in that said speed converting means converts said flask set position signal value $P_D$** to said speed setting signal value $S_j$ or $S_{j\pm1}$ in accordance with the previously stored set position signal.

## Patentanspruch

Nähmaschinensteuergerät, mit einer Einstelleinrichtung zum Einstellen einer Maschinengeschwindigkeit, einem Stellposition-Detektor zum Umwandeln der Stellposition der Einstelleinrichtung in ein digitales Stellpositionssignal $P_D$, einem Geschwindigkeits-Konverter zum Umsetzen des Stellpositionssignals $P_D$ in ein digitales Geschwindigkeits-Stellsignal S, mit einem Motor, dessen Geschwindigkeit in Abhängigkeit vom Geschwindigkeits-Stellsignal S in Stufen gesteuert wird, mit einer von dem Motor mechanisch angetriebenen Nähmaschine, mit einer Speichereinrichtung zum Speichern des Stellpositionssignals $P_D$, wobei jedes der diskreten Geschwindigkeits-Stellsignale ($S_j$, j=0, 1, 2...) einer Reihe von digitalen Stellpositionssignalen ($P_{Dm}$, m=0, 1, 2...) entspricht, wobei $P_D$** das Stellpositionssignal an einer Flanke zwischen zwei benachbarten Geschwindigkeits-Stellsignalen ($S_j$, $S_{j\pm1}$) darstellt, dadurch gekennzeichnet, daß der Geschwindigkeits-Konverter den Wert des Flanken-Stellpositionssignals $P_D$** in Abhängigkeit von dem zuvor gespeicherten Stellpositionssignal in den Wert $S_j$ oder $S_{j\pm1}$ des Geschwindigkeits-Stellsignals umsetzt.

## Revendication

Appareil de commande de machine à coudre comprenant un dispositif de réglage d'une vitesse de la machine, un dispositif de détection d'une position de consigne destiné à transformer la position du dispositif de réglage en un signal numérique de position de consigne $P_D$, un dispositif convertisseur de vitesse destiné à transformer le signal de position de consigne $P_D$ en un signal numérique de réglage de vitesse S, un moteur dont la vitesse est réglée pas à pas en fonction du signal de réglage de vitesse S, une machine à coudre destinée à être entraînée mécaniquement par le moteur, un dispositif de mémorisation destiné à conserver le signal de position de consigne $P_D$, chacun des signaux séparés de réglage de vitesse de machine ($S_j$, j=0, 1, 2,...) correspondant à une série de signaux numériques de position de consigne ($P_{Dm}$, m=0, 1, 2,...), $P_D$** étant le signal de position à un flanc compris entre deux signaux adjacente de

5

réglage de vitesse ($S_j$, $S_{j\pm1}$), caractérisé en ce que le dispositif de conversion de vitesse transforme la valeur du signal de position de consigne de flanc $P_D^{**}$ en valeur du signal de réglage de vitesse $S_j$ ou $S_{j\pm1}$ en fonction du signal de position de consigne antérieurement mémorisé.

Fig. 1

Fig. 2

machine speed $N_M$

$S_4 = 0$
$S_2 = 1$
$S_3 = 2$

$m = 0,1,2$ 3 4 5 6 7 8 9 10 11 12 13 14 15 16 17 18 19 20 22 24 26 28 30 31
21 23 25 27 29

set position signal $P_{Dm}$

1

## Fig.3

```
        ( speed setting )
                |                    19
                |
        ┌───────────────┐
       /  reading of    /
      /   set position /
     /    signal P_D   /
    └────────────────┘
                |                    20
                |
            ╱───────╲        YES
          ╱  P_D =0~5? ╲──────────────┐
           ╲         ╱                |
             ╲─────╱                  |
                |                     |
               NO          21         |
                |                     |
            ╱────────╲           ( to stop processing )
   24     ╱   P_D    ╲
          ╱ coincidence with ╲   NO
   NO   ╱  P_D of table II ╲──────┐
         ╲      ?        ╱        |
           ╲──────────╱          |
                |                 |
               YES       22       |
                |                 |
  ┌──────────┐  ╱──────────╲          |
  │ P_D is newly│╱ P_D(previous)-P_D=1╲  YES
  │  stored    │╲      ?      ╱──────────┐
  └──────────┘  ╲──────────╱           |
       |              |                |
       |             NO      25         |          23
       |              |                 |
       └──────┐  ┌──────────────┐   ┌──────────────┐
              │  │ P_D →S conversion│ │ P_D →S conversion│
              └──│ by ROM table 1 │   │ by ROM table 2 │
                 └──────────────┘   └──────────────┘
                        |                  |
                        |←─────────────────┘
                        |
              ( to the following processing )
```